# EUROPEAN PATENT APPLICATION

(11) **EP 2 605 110 A2**
(43) Date of publication of application: **19.06.2013**
(21) Application number: 12157212.7
(22) Date of filing: 28.02.2012
(51) Int. Cl.: G06F 3/0362

(54) **Control device**

(30) Priority: 16.12.2011 TW 100223769
(71) Applicant: Hsu, Liang, New Taipei City (TW)
(72) Inventor: Nien, Chung-Yueh, Taiwan, ROC New Taipei City, (TW); Cheng, Yu-Chih, Taiwan, ROC New Taipei City, (TW)
(74) Representative: Rees, Simon John Lewis

(57) **Abstract**

A control device for controlling a cursor is provided. The control device includes a main body, a roller, and a circuit board. The main body has a holder. The roller is detachably disposed on the holder. The circuit module includes a detecting module for detecting movement and rotation of the roller on the holder. The roller includes a roller body and an assembled sliding mechanism. The assembled sliding mechanism is connected with the roller body and contacted with the holder. Consequently, during the roller is operated by a user, the friction generated by the roller is minimized.

## Description

### CROSS-REFERENCE TO RELATED APPLICATION

This application claims the priority of Taiwan patent application number 100223769, filed on December 16, 2011.

### FIELD OF THE INVENTION

The present invention relates to a control device, and more particularly to a control device for controlling a cursor by using a detachable roller.

### BACKGROUND OF THE INVENTION

With increasing development of science and technology, the computing performance of personal computers becomes more powerful. Consequently, personal computers are widely used to do various matters in our daily lives. For example, personal computers may be used at work to receive/transmit electronic mails and process documents. In addition, people may use personal computer to obtain information (e.g. information searching) and achieve leisure entertainment (e.g. music appreciation and games). Consequently, people spend much time in operating the personal computers, and the personal computers become essential device in modem societies. Conventionally, the personal computer is equipped with a mouse. The mouse is in communication with the personal computer. The user may operate the mouse to control a cursor on the display screen with a single hand.

Since the user's reliance on the personal computer is gradually increased, the time of operating the conventional mouse is also increased. However, most of the commercially available mouse devices are not based on the ergonomic demands. Consequently, during operation of the non-ergonomic mouse, the improper gesture of holding the mouse may apply inadvertent force by the user's hand. A long time period of continuously operating the conventional mouse may cause pain in the user's hand. If the user ignores the hand's pain at the initial stage and continuously uses the poorly-designed mouse, the user's hand may be suffered from permanent work injury.

For example, during operations of the conventional mouse, the wrist of the hand of the user is firstly placed on a desk surface, and then the mouse is moved with the palm and fingers. For moving the mouse to a large extent, the wrist needs to be raised and then the mouse is moved with the elbow. After the mouse has been used for a long period and frequently used, the hand of the user is readily suffered from a carpal tunnel syndrome.

In order to eliminate this problem, a wrist pad is disclosed. During operation of the mouse, the wrist of the user is possibly raised to move the mouse to a large extent. Under this circumstance, the wrist is separated from the wrist pad. Since the mouse may be raised and the location is largely changed according to the use habits of many users, the usefulness of the wrist pad is largely reduced. Therefore, the manufacturers are devoted to the improvement of the conventional mouse in order to place the wrist of the hand in position and operate the mouse within the range of the wrist pad while using a single hand or two hands to achieve the function of operating the conventional mouse.

Therefore, it is desirable to provide an ergonomic control device for eliminating the above problems. For solving the above problem, the inventors of the present invention are devoted to the study of a well-design and effective control device.

### SUMMARY OF THE INVENTION

The present invention provides a control device for controlling a cursor by operating a roller. The roller is detachable from the control device, so that the roller may be cleaned or replaced with a new one.

The present invention further provides a control device, in which a sliding-auxiliary element is located at an end of a roller for reducing the friction of the roller during the roller is rotated or moved. Under this circumstance, a small force is sufficient to allow the user's fingers to be moved back and force to easily operate the roller while increasing the operating smoothness.

The present invention further provides a control device, in which a covering member is movably disposed on the main body. When the main body is covered by the covering member, the roller is limited to be located at the control device by the covering member. After the covering member is uplifted, the roller may be taken by the user and detached from the control device.

The present invention further provides a control device with a variety of peripheral devices, so that the applications of the control device are more versatile. For example, the control device may integrate a scanner, a keyboard, a vertical-type machine, or the like.

In accordance with an aspect of the present invention, there is provided a control device for controlling a cursor. The control device includes a main body, a roller, and a circuit board. The main body has a holder. An accommodation space is defined within the main body. The roller is detachably disposed on the holder, and at least includes a roller body and an assembled sliding mechanism. The assembled sliding mechanism is connected with the roller body, and the assembled sliding mechanism is in contact with the holder. The circuit module is received within the accommodation space. The circuit module includes a detecting module for detecting the roller on the holder.

In an embodiment, the assembled sliding mechanism includes a sliding-auxiliary element and a positioning member. The sliding-auxiliary element is positioned on the roller body by the positioning member, and the sliding-auxiliary element is in contact with the holder.

In an embodiment, the sliding-auxiliary element is a sliding-auxiliary ring, the positioning member includes an outer clamping element and an inner clamping element, and the inner clamping element is coupled with the roller body. The sliding-auxiliary ring is clamped by the outer clamping element and the inner clamping element collectively, the outer clamping element has an extension part, and at least one hooking structure is formed at a distal end of the extension par. After the extension part is penetrated through the sliding-auxiliary ring, the at least one hooking structure of the outer clamping element is engaged with the inner clamping element. Alternatively, the sliding-auxiliary element includes a sliding-auxiliary part and a stopping part, the sliding-auxiliary part and the stopping part are respectively located at both ends of the sliding-auxiliary element, the stopping part is extended from the sliding-auxiliary part, and the sliding-auxiliary part has an arc-shape profile. The positioning member is a fixing ring, the fixing ring is coupled with the roller body, a perforation is defined within the fixing ring, and the stopping part is penetrated through the perforation, so that the sliding-auxiliary part and the stopping part are limited to be located at both sides of the fixing ring. A cross-sectional area of the perforation is smaller than the maximum cross-sectional area of the sliding-auxiliary part and smaller than the maximum cross-sectional area of the sliding-auxiliary part. Alternatively, the sliding-auxiliary element includes an upper hemisphere, a lower hemisphere, a connecting part, and a bearing. The upper hemisphere and the lower hemisphere are connected with each other by the connecting part, the bearing has an aperture, the connecting part is penetrated through the aperture, the positioning member is a receiving seat, the receiving seat is coupled with the roller body, and the bearing is inserted into the receiving seat.

In an embodiment, the sliding-auxiliary element is made of polyoxymetylene (POM), polytetrafluoroethylene (PTFE) or any other self-lubricating material. Alternatively, the assembled sliding mechanism includes two sliding-auxiliary elements and two positioning members, and the two sliding-auxiliary elements are positioned at the both ends of the roller body by the two positioning members.

In an embodiment, the main body further includes a plurality of operation members for triggering a plurality of control switches of the circuit module. Alternatively, the main body further includes a touchpad, which is in communication with the circuit module for triggering a plurality of control switches of the circuit module. Alternatively, the main body further includes at least one connecting arm, at least one shaft, and at least one supporting member. The at least one connecting arm is extended from the holder and connected to the at least one shaft, and at least one shaft is pivotally coupled to the at least one supporting member. The main body further includes a triggering key, and the triggering key is extended from the at least one shaft. As the at least one shaft is rotated, the triggering key is synchronously rotated to trigger a specified one of the plurality of control switches of the circuit module.

In an embodiment, the control device further includes a covering member. The covering member is movably disposed on the main body for partially sheltering the holder. A slot is defined by the covering member and the main body collectively. When the holder is partially sheltered by the covering member, the length of the slot is shorter than the length of the roller, and the roller is limited to be located on the holder by the covering member. When the holder is not sheltered by the covering member, the length of the slot is greater than the length of the roller, so that the roller is detachable from the holder.

In an embodiment, the control device further includes a peripheral device. The peripheral device is a keyboard, which is in communication with the circuit module in a wired transmission manner or a wireless transmission manner. Alternatively, the peripheral device is a handheld scanning device or a sheet fed scanning device, which is in communication with the circuit module in a wired transmission manner or a wireless transmission manner. Alternatively, the peripheral device at least includes a projection module, a camera module, an industrial computer or host, a commercial computer or host, a medical computer or host, a handheld electronic device, or a combination thereof.

In accordance with another aspect of the present invention, there is provided a control device for controlling a cursor. The control device includes a main body, a covering member, a roller, and a circuit module. The main body has a holder, wherein an accommodation space is defined within the main body. The covering member is movably disposed on the main body for partially sheltering the holder, wherein a slot is defined by the covering member and the main body collectively. The roller is detachably disposed on the holder. The circuit module is received within the accommodation space, wherein the circuit module includes a detecting module for detecting the roller on the holder. When the holder is partially sheltered by the covering member, the length of the slot is shorter than the length of the roller, and the roller is limited to be located on the holder by the covering member. When the holder is not sheltered by the covering member, the length of the slot is greater than the length of the roller, so that the roller is detachable from the holder.

In an embodiment, the roller includes a roller body and an assembled sliding mechanism, wherein the assembled sliding mechanism is connected with the roller body, and the assembled sliding mechanism is in contact with the holder. The assembled sliding mechanism includes a sliding-auxiliary element and a positioning member, wherein the sliding-auxiliary element is positioned on the roller body by the positioning member, and the sliding-auxiliary element is in contact with the holder.

In an embodiment, the sliding-auxiliary element is a sliding-auxiliary ring, the positioning member includes an outer clamping element and an inner clamping element, and the inner clamping element is coupled with the roller body. The sliding-auxiliary ring is clamped by the outer clamping element and the inner clamping element collectively, the outer clamping element has an extension part, and at least one hooking structure is formed at a distal end of the extension par. After the extension part is penetrated through the sliding-auxiliary ring, the at least one hooking structure of the outer clamping element is engaged with the inner clamping element. Alternatively, the sliding-auxiliary element includes a sliding-auxiliary part and a stopping part, the sliding-auxiliary part and the stopping part are respectively located at both ends of the sliding-auxiliary element, the stopping part is extended from the sliding-auxiliary part, and the sliding-auxiliary part has an arc-shape profile. The positioning member is a fixing ring, the fixing ring is coupled with the roller body, a perforation is defined within the fixing ring, and the stopping part is penetrated through the perforation, so that the sliding-auxiliary part and the stopping part are limited to be located at both sides of the fixing ring. A cross-sectional area of the perforation is smaller than the maximum cross-sectional area of the sliding-auxiliary part and smaller than the maximum cross-sectional area of the sliding-auxiliary part. Alternatively, the sliding-auxiliary element includes an upper hemisphere, a lower hemisphere, a connecting part, and a bearing. The upper hemisphere and the lower hemisphere are connected with each other by the connecting part, the bearing has an aperture, the connecting part is penetrated through the aperture, the positioning member is a receiving seat, the receiving seat is coupled with the roller body, and the bearing is inserted into the receiving seat.

In an embodiment, the sliding-auxiliary element is made of polyoxymetylene (POM), polytetrafluoroethylene (PTFE) or any other self-lubricating material. Alternatively, the assembled sliding mechanism includes two sliding-auxiliary elements and two positioning members, and the two sliding-auxiliary elements are positioned at the both ends of the roller body by the two positioning members.

In an embodiment, the main body further includes a plurality of operation members for triggering a plurality of control switches of the circuit module. Alternatively, the main body further includes a touchpad, which is in communication with the circuit module for triggering a plurality of control switches of the circuit module. Alternatively, the main body further includes at least one connecting arm, at least one shaft, and at least one supporting member. The at least one connecting arm is extended from the holder and connected to the at least one shaft, and at least one shaft is pivotally coupled to the at least one supporting member. The main body further includes a triggering key, and the triggering key is extended from the at least one shaft. As the at least one shaft is rotated, the triggering key is synchronously rotated to trigger a specified one of the plurality of control switches of the circuit module.

In an embodiment, the control device further includes a peripheral device. The peripheral device is a keyboard, which is in communication with the circuit module in a wired transmission manner or a wireless transmission manner. Alternatively, the peripheral device is a scanning device, which is in communication with the circuit module in a wired transmission manner or a wireless transmission manner. Alternatively, the peripheral device at least includes a projection module, a camera module, an industrial computer or host, a commercial computer or host, a medical computer or host, a handheld electronic device, or a combination thereof.

In accordance with a further aspect of the present invention, there is provided a control device for controlling a cursor. The control device includes a main body, a roller, a circuit module, and a peripheral device. The main body has a holder, wherein an accommodation space is defined within the main body. The roller is detachably disposed on the holder. The circuit module is received within the accommodation space, wherein the circuit module further includes a detecting module for detecting the roller on the holder. The peripheral device is in communication with the circuit module.

In an embodiment, the roller includes a roller body and an assembled sliding mechanism, wherein the assembled sliding mechanism is connected with the roller body, and the assembled sliding mechanism is in contact with the holder. The assembled sliding mechanism includes a sliding-auxiliary element and a positioning member, wherein the sliding-auxiliary element is positioned on the roller body by the positioning member, and the sliding-auxiliary element is in contact with the holder.

In an embodiment, the sliding-auxiliary element is a sliding-auxiliary ring, the positioning member includes an outer clamping element and an inner clamping element, and the inner clamping element is coupled with the roller body. The sliding-auxiliary ring is clamped by the outer clamping element and the inner clamping element collectively, the outer clamping element has an extension part, and at least one hooking structure is formed at a distal end of the extension par. After the extension part is penetrated through the sliding-auxiliary ring, the at least one hooking structure of the outer clamping element is engaged with the inner clamping element. Alternatively, the sliding-auxiliary element includes a sliding-auxiliary part and a stopping part, the sliding-auxiliary part and the stopping part are respectively located at both ends of the sliding-auxiliary element, the stopping part is extended from the sliding-auxiliary part, and the sliding-auxiliary part has an arc-shape profile. The positioning member is a fixing ring, the fixing ring is coupled with the roller body, a perforation is defined within the fixing ring, and the stopping part is penetrated through the perforation, so that the sliding-auxiliary part and the stopping part are limited to be located at both sides of the fixing ring. A cross-sectional area of the perforation is smaller than the maximum cross-sectional area of the sliding-auxiliary part and smaller than the maximum cross-sectional area of the sliding-auxiliary part. Alternatively, the sliding-auxiliary element includes an upper hemisphere, a lower hemisphere, a connecting part, and a bearing. The upper hemisphere and the lower hemisphere are connected with each other by the connecting part, the bearing has an aperture, the connecting part is penetrated through the aperture, the positioning member is a receiving seat, the receiving seat is coupled with the roller body, and the bearing is inserted into the receiving seat.

In an embodiment, the sliding-auxiliary element is made of polyoxymetylene (POM), polytetrafluoroethylene (PTFE) or any other self-lubricating material. Alternatively, the assembled sliding mechanism includes two sliding-auxiliary elements and two positioning members, and the two sliding-auxiliary elements are positioned at the both ends of the roller body by the two positioning members.

In an embodiment, the main body further includes a plurality of operation members for triggering a plurality of control switches of the circuit module. Alternatively, the main body further includes a touchpad, which is in communication with the circuit module for triggering a plurality of control switches of the circuit module. Alternatively, the main body further includes at least one connecting arm, at least one shaft, and at least one supporting member. The at least one connecting arm is extended from the holder and connected to the at least one shaft, and at least one shaft is pivotally coupled to the at least one supporting member. The main body further includes a triggering key, and the triggering key is extended from the at least one shaft. As the at least one shaft is rotated, the triggering key is synchronously rotated to trigger a specified one of the plurality of control switches of the circuit module.

In an embodiment, the control device further includes a covering member. The covering member is pivotally coupled to the main body for partially sheltering the holder. A slot is defined by the covering member and the main body. When the holder is partially sheltered by the covering member, the length of the slot is shorter than the length of the roller, and the roller is limited to be located on the holder by the covering member. When the holder is not sheltered by the covering member, the length of the slot is greater than the length of the roller, so that the roller is detachable from the holder.

In an embodiment, the control device further includes a peripheral device. The peripheral device is a keyboard, which is in communication with the circuit module in a wired transmission manner or a wireless transmission manner. Alternatively, the peripheral device is a handheld scanning device or a sheet fed scanning device, which is in communication with the circuit module in a wired transmission manner or a wireless transmission manner. Alternatively, the peripheral device at least includes a projection module, a camera module, an industrial computer or host, a commercial computer or host, a medical computer or host, a handheld electronic device, or a combination thereof.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic perspective view illustrating a control device according to a first embodiment of the present invention;

FIG. 2 is a schematic exploded view illustrating the control device as shown in FIG. 1;

FIG. 3 is a schematic perspective view illustrating the inner components of the control device as shown in FIG. 1;

FIG. 4 is a schematic perspective view illustrating a first exemplary assembled sliding mechanism used in the control device of the first embodiment of the present invention;

FIG. 5 is a schematic partial exploded view the first exemplary assembled sliding mechanism of FIG. 4;

FIG. 6 is a schematic perspective view illustrating a second exemplary assembled sliding mechanism used in the control device of the first embodiment of the present invention;

FIG. 7 is a schematic partial exploded view the first exemplary assembled sliding mechanism of FIG. 6;

FIG. 8 is a schematic perspective view illustrating a third exemplary assembled sliding mechanism used in the control device of the first embodiment of the present invention;

FIG. 9 is a schematic partial exploded view the first exemplary assembled sliding mechanism of FIG. 8;

FIG. 10 is a schematic perspective view illustrating a control device according to a second embodiment of the present invention;

FIG. 11 is a schematic exploded view illustrating the control device as shown in FIG. 10;

FIG. 12 is a schematic perspective view illustrating a control device with a scanning device according to an embodiment of the present invention;

FIG. 13 is a schematic perspective view illustrating a control device with another scanning device according to another embodiment of the present invention;

FIG. 14 is a schematic perspective view illustrating a control device with a keyboard according to an embodiment of the present invention; and

FIG. 15 is a schematic perspective view illustrating an application environment of a control device according to an embodiment of the present invention.

### DETAILED DESCRIPTION OF THE PREFERRED EMBODIMENT

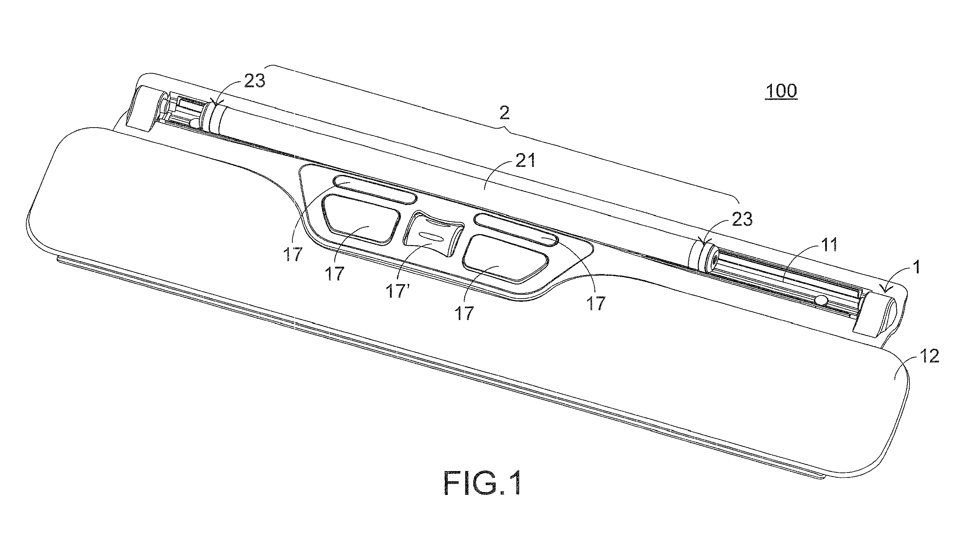

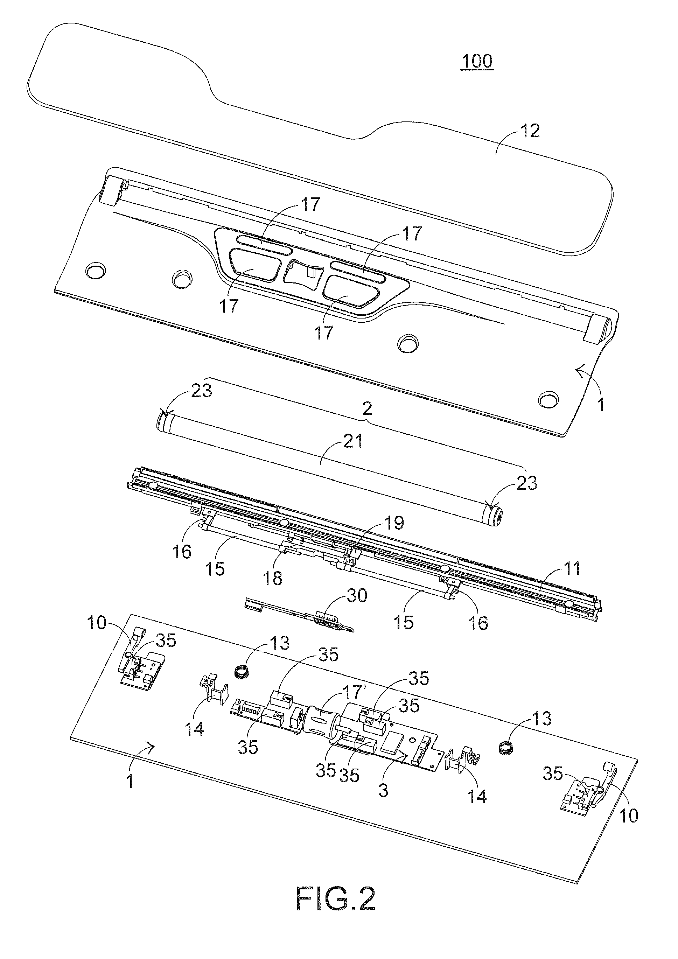

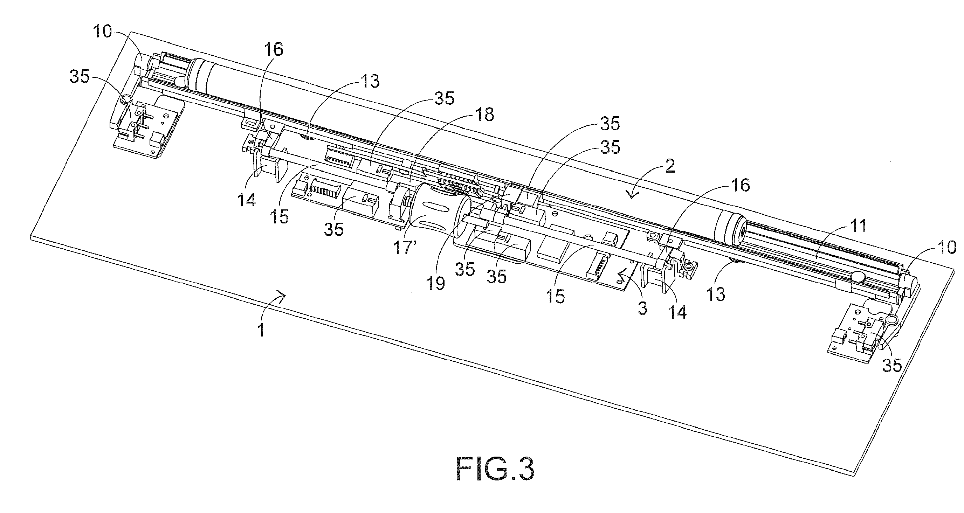

Please refer to FIGS. 1, 2 and 3. FIG. 1 is a schematic perspective view illustrating a control device according to a first embodiment of the present invention. FIG. 2 is a schematic exploded view illustrating the control device as shown in FIG. 1. FIG. 3 is a schematic perspective view illustrating the inner components of the control device as shown in FIG. 1.

As shown in FIG. 1, the control device 100 comprises a main body 1 and a roller 2 (or named rolling roll). The main body 1 comprises a holder 11, or named carrier frame. The holder 11 with a rotation groove is exposed outside. The roller 2 is disposed on the rotation groove of the holder 11. Consequently, the roller 2 may be removed from the holder 11 by a user; the roller 2 may be placed on the holder 11 by the user; or the roller 2 may be operated by the user to be moved leftwards/rightwards or rotated forwardly/backwardly on the holder 11. Since the user's hand is usually in contact with various articles, the user's hand is readily contaminated by dusk, dirt, grease or other impurities. When the roller 2 is operated by the user, the roller 2 may be contaminated by the impurities. In accordance with the present invention, the roller 2 may be removed by the user for cleaning in order to achieve the smoothness of rotating or moving the roller 2. Moreover, the operation of the roller 2 may provide good tactile feel to the user.

Please refer to FIG. 1 again. The roller 2 at least comprises a roller body 21 and an assembled sliding mechanism 23. The assembled sliding mechanism 23 is connected with the roller body 21. Preferably, the assembled sliding mechanism 23 is connected with both ends of the roller body 21 along an axial direction of the roller body 21. Via the assembled sliding mechanism 23, the roller 2 is contacted with the holder 11. Consequently, during the roller 2 is moved or rotated, the friction between the roller 2 and the holder 11 will be reduced. Under this circumstance, a small force is sufficient to allow the user's fingers to be moved back and force to operate the roller while increasing the operating smoothness. In addition, during the process of operating the control device of the present invention, the user may rest the hands on a wrist pad 12. Consequently, the gesture of the user's hands can be maintained at the natural relaxation status, and the possibility of suffering from carpal tunnel syndrome will be largely reduced.

Please refer to FIG. 2. The control device 100 further comprises a circuit module 3. The main body 1 of the control device 100 may define an accommodation space therein. The circuit module 3 is received within the accommodation space. The circuit module 3 comprises a detecting module 30, or named sensor module, and a single position sensor of the detecting module 30 is configured for detecting a moving distance and a rotating distance of the roller 2 on the holder 11. By means of the detecting module 30, the user may move the roller 2 to correspondingly control a cursor on a display screen (not shown) leftwards or rightwards, and the user may rotate the roller 2 to correspondingly control a cursor on a display screen forwardly or backwardly. Moreover, the circuit module 3 further comprises a plurality of control switches 35. The main body 1 further comprises a plurality of operation members 17 corresponding to respective control switches 35. When one of the operation members 17 is pressed down by the user, a corresponding control switch 35 is triggered to implement a corresponding function similar to a left button, a right button, a wheel or any other function key of the conventional mouse.

In one embodiment, the surface of the roller 2 is lack of a pattern relevant to detecting of the single position sensor. Even there is any pattern formed on the surface of the roller 2, for example, any regular or random pattern of striped, web striped or others on the surface of the roller 2, it is not configured for the detecting of the single position sensor. Accordingly, the detection function of the single position sensor may be achieved by selecting one to images of the surface (regardless of a smooth surface or a patterned surface) of the roller 2 to determine the rotating and the moving action done by the roller at time intervals.

It is noted that one of the operation members 17 may be selectively designed as a three-dimensional wheel 17' (or a conventional two-dimensional wheel) by the manufacturer. Like the conventional two-dimensional wheel, the three-dimensional wheel 17' may be rotated forwardly or backwardly. Moreover, the three-dimensional wheel 17' may be pressed down, tilted leftwards or rightwards, or moved leftwards or rightwards. The three-dimensional wheel 17' may facilitate the user to control the cursor in a versatile manner. The three-dimensional wheel 17' is presented herein for purpose of illustration and description only.

Please refer to FIG. 3 again. The main body 1 further comprises at least one connecting arm 16, at least one shaft 15, and at least one supporting member 14. The at least one connecting arm 16 is extended from the holder 11, and connected to the at least one shaft 15. In addition, the at least one shaft 15 is supported by and pivotally coupled to the supporting member 14. In this embodiment, the at least one connecting arm 16 of the control device of the present invention comprises two connecting arms 16. The at least one shaft 15 comprises two shafts 15, which are arranged along a coaxial direction. The two ends of the two shafts 15 which are located adjacent to each other are connected to a coupling member 18. Consequently, when the holder 11 is pressed down, the holder 11 is rotated downwardly by using the two shafts 15 as an axle center.

Moreover, the main body 1 further comprises a triggering key 19. The triggering key 19 is extended from the at least one shaft 15. Consequently, as the at least one shaft 15 is rotated, the triggering key 19 is synchronously rotated. In a case that the holder 11 is moved downwardly in response to a downward force exerted on the roller 2, the triggering key 19 is correspondingly rotated in the same direction. At the same time, a specified one of the control switches 35 of the circuit module 3 is triggered by the triggering key 19, and thus a cursor-clicking effect is generated.

Moreover, the main body 1 further comprises at least one position-returning spring 13. The position-returning spring 13 is disposed under the holder 11 and sustained against the holder 11. After the downward force is eliminated, in response to the restoring force of the at least one position-returning spring 13, the holder 11 will be moved upwardly and returned to an initial position where the holder 11 has not been pressed down. Meanwhile, the user may prepare to press down the holder 11 again. In the above embodiment, the way of receiving the downward force and the way of returning the holder 11 to the initial position after the downward force is eliminated are presented herein for purpose of illustration and description only. However, those skilled in the art will readily observe that numerous modifications and alterations of the holder 11 may be made while retaining the teachings of the invention. For example, according to the requirements of the manufacturer, the holder 11 is unable to be pressed down and the position of the holder 11 is adjustable.

Please refer to FIG. 3 again. The main body 1 further comprises a left reset key 10 and a right reset key 10. These two reset keys 10 are arranged along the axial direction of the roller 2, and are arranged at two opposite terminals of the holder 11. In a case that the roller 2 is moved leftwards or rightwards by the user, the roller 2 will be sustained against the left reset key 10 or the right reset key 10. Consequently, the left reset key 10 or the right reset key 10 will touch a corresponding control switch 35 of the circuit module 3. Under this circumstance, the control switch 35 issues a reset signal. In response to the reset signal, the cursor on the display screen is moved to a reset point. The way of moving the cursor to the reset point is presented herein for purpose of illustration and description only. However, those skilled in the art will readily observe that numerous modifications and alterations of the reset key 10 may be made while retaining the teachings of the invention. For example, the reset key 10 may be replaced by a sensing module such as a Hall IC sensor or a magnetoresistive sensor (not shown). Once the sensing module detects that a displacement change of the roller is greater than a preset value, the cursor will be moved to the rest point.

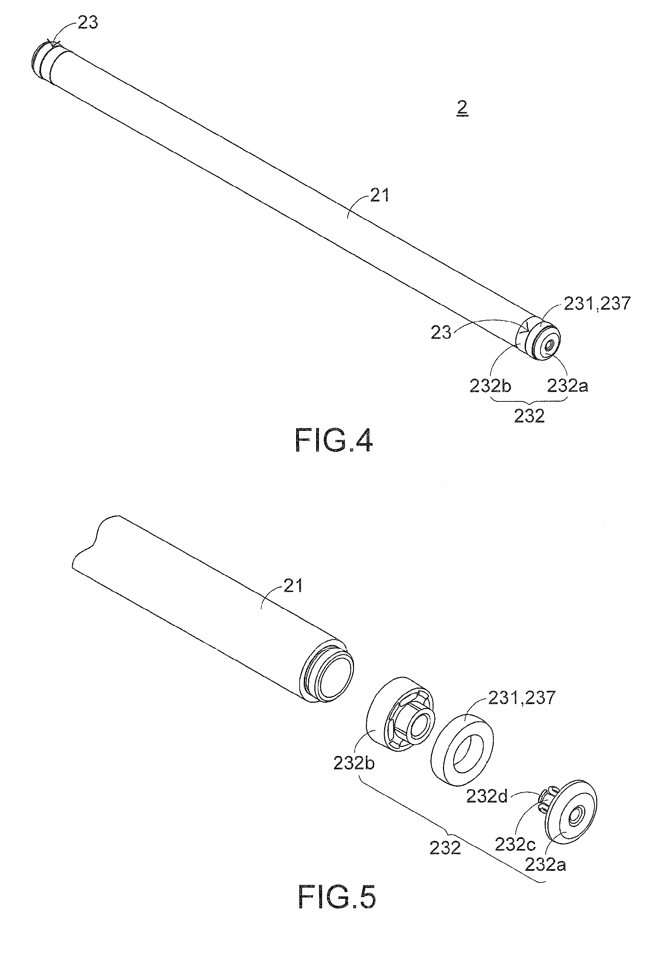

FIGS. 4-9 schematically illustrate three exemplary assembled sliding mechanisms used in the control device of the first embodiment of the present invention. The assembled sliding mechanism 23 comprises a sliding-auxiliary element 231 and a positioning member 232. The positioning member 232 is used for positioning the sliding-auxiliary element 231 on the roller body 21. It is preferred that the assembled sliding mechanism 23 comprises two sliding-auxiliary elements 231 and two positioning members 232. By these two positioning members 232, the two sliding-auxiliary elements 231 are positioned at the both ends of the roller body 21 along the axial direction of the roller body 21. Consequently, the friction between the roller 2 and the holder 11 will be reduced.

Please refer to FIGS. 4 and 5. FIG. 4 is a schematic perspective view illustrating a first exemplary assembled sliding mechanism used in the control device of the first embodiment of the present invention. FIG. 5 is a schematic partial exploded view the first exemplary assembled sliding mechanism of FIG. 4. The sliding-auxiliary element 231 is a sliding-auxiliary ring 237. The positioning member 232 comprises an outer clamping element 232a and an inner clamping element 232b. The inner clamping element 232b is coupled with the roller body 21. The sliding-auxiliary ring 237 is arranged between the outer clamping element 232a and the inner clamping element 232b, and clamped by the outer clamping element 232a and the inner clamping element 232b collectively. In addition, the outer clamping element 232a has an extension part 232c. At least one hooking structure 232d is formed at a distal end of the extension part 232c. After the extension part 232c is penetrated through the sliding-auxiliary ring 237, the at least one hooking structure 232d of the outer clamping element 232a is engaged with the inner clamping element 232b. Consequently, the sliding-auxiliary ring 237 is fixed between the outer clamping element 232a and the inner clamping element 232b.

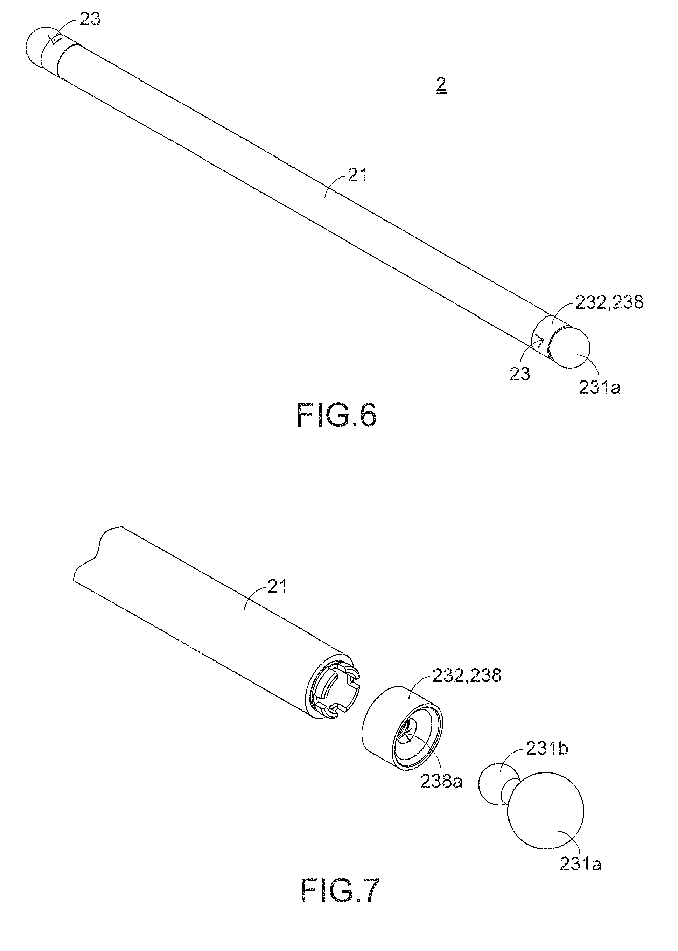

Please refer to FIGS. 6 and 7. FIG. 6 is a schematic perspective view illustrating a second exemplary assembled sliding mechanism used in the control device of the first embodiment of the present invention. FIG. 7 is a schematic partial exploded view the first exemplary assembled sliding mechanism of FIG. 6. The sliding-auxiliary element 231 comprises a sliding-auxiliary part 231 a and a stopping part 231b. The sliding-auxiliary part 231a and the stopping part 231bare located at both ends of the sliding-auxiliary element 231, respectively. The stopping part 231b is extended from the sliding-auxiliary part 231a. Preferably, the sliding-auxiliary part 231a has an arc-shape profile. The positioning member 232 is a fixing ring 238. The fixing ring 238 is coupled with the roller body 21. In addition, a perforation 238a is defined within the fixing ring 238. Especially, the stopping part 231b is penetrated through the perforation 238a, wherein the cross-sectional area of the perforation 238a is smaller than the maximum cross-sectional area of the sliding-auxiliary part 231a and smaller than the maximum cross-sectional area of the sliding-auxiliary part 231a. In such way, the sliding-auxiliary part 231a and the stopping part 231b are limited to be located at the both sides of the fixing ring 238. Consequently, during the roller 2 is operated by the user, the sliding-auxiliary part 231a of the sliding-auxiliary element 231 may facilitate reducing the fiction generation of the roller 2.

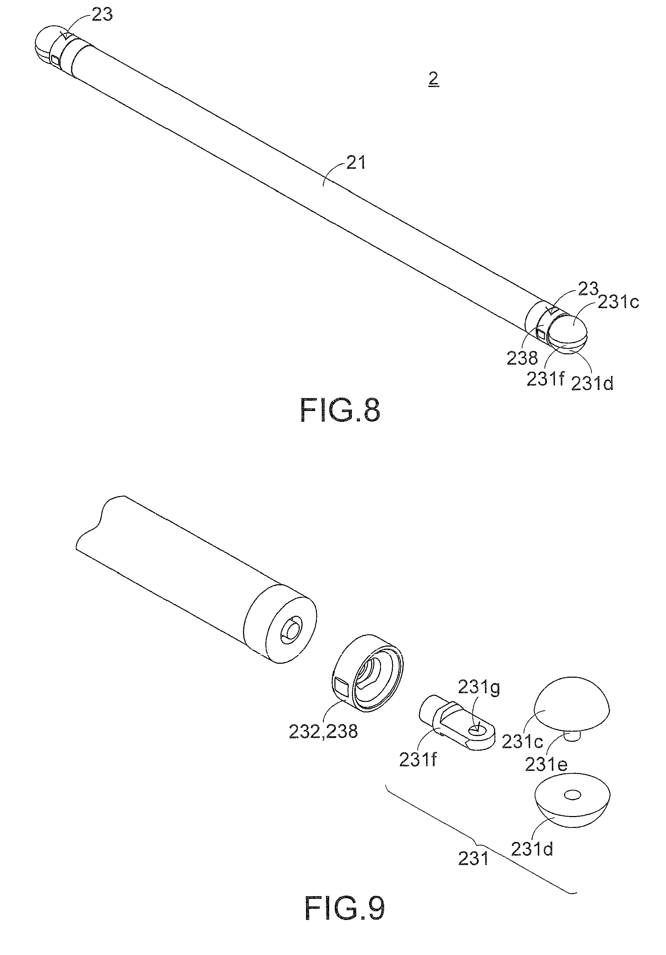

Please refer to FIGS. 8 and 9. FIG. 8 is a schematic perspective view illustrating a third exemplary assembled sliding mechanism used in the control device of the first embodiment of the present invention. FIG. 9 is a schematic partial exploded view the first exemplary assembled sliding mechanism of FIG. 8. The sliding-auxiliary element 231 comprises an upper hemisphere 231c, a lower hemisphere 231d, a connecting part 231e, and a bearing 231f. The connecting part 231e is used for connecting the upper hemisphere 231c and the lower hemisphere 231d. The bearing 231f has an aperture 231 g. The connecting part 231e is penetrated through the aperture 231 g. The positioning member 232 is a receiving seat 238. The receiving seat 238 is coupled with the roller body 21. The bearing 231f is inserted into the receiving seat 238. In such way, the sliding-auxiliary element 231 may be rotated at any angle, and thus the smoothness of rotating or moving the roller 2 will be enhanced.

In the above embodiment, the sliding-auxiliary element is made of polyoxymetylene (POM), polytetrafluoroethylene (PTFE), or any other suitable self-lubricating material. The material of the sliding-auxiliary element is not restricted as long as the material of the sliding-auxiliary element is effective to reduce the friction generation. Moreover, the roller 2 may be a solid roller or a hollow roller. If the roller 2 is a hollow roller, the roller 2 may be filled with a heavy article. In such way, the weight of the roller 2 may be adjusted according to the volume change in order to enhance the operating feel and increase the stability. Moreover, according to the preferences and habits of different users, the roller 2 with a desired weight may be selected to prevent from falling down the roller 2 because the external force is inadvertently applied on the roller 2.

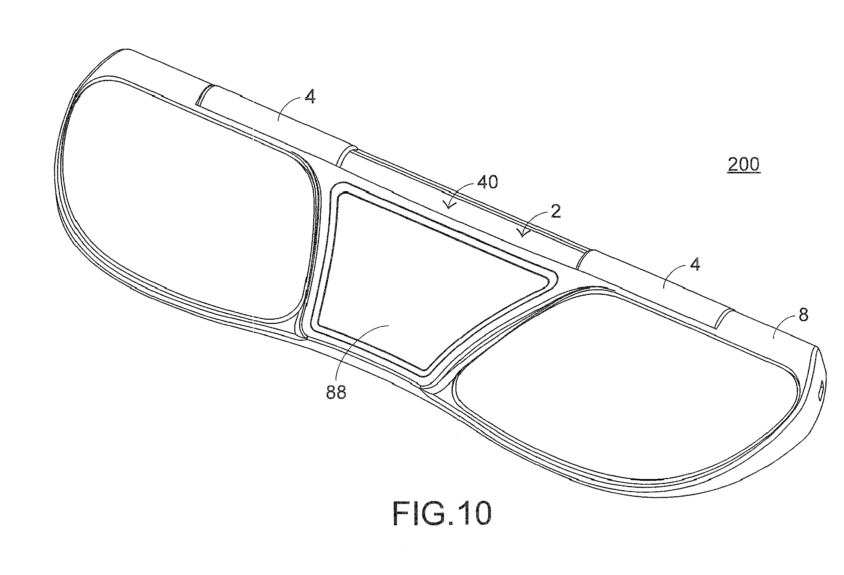

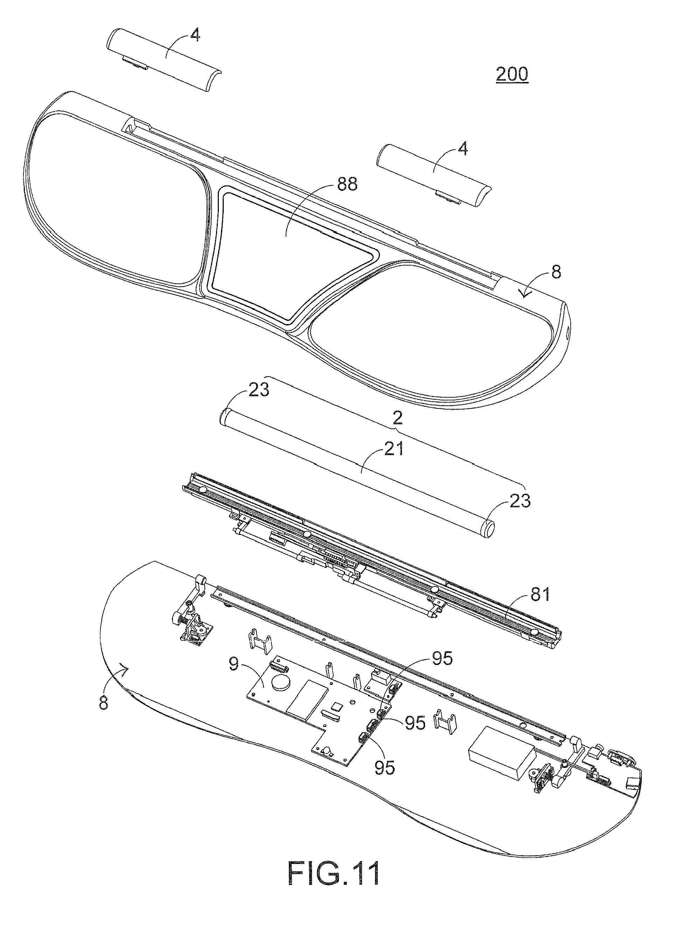

Please refer to FIGS. 10 and 11. FIG. 10 is a schematic perspective view illustrating a control device according to a second embodiment of the present invention. FIG. 11 is a schematic exploded view illustrating the control device as shown in FIG. 10. Like the first embodiment, the control device 200 of the second embodiment comprises a main body 8, a roller 2, and a circuit module 9. The main body 8 comprises a holder 81. The holder 81 is exposed outside. The roller 2 is disposed on the holder 81. Consequently, the roller 2 may be removed from the holder 81 by a user; the roller 2 may be placed on the holder 81 by the user; or the roller 2 may be operated by the user to be moved leftwards/rightwards or rotated forwardly/backwardly on the holder 81. Alternatively, the main body 1, 8 or the roller 2 used in the first embodiment or the second embodiment may be selectively modified according to the practical requirements.

In comparison with the first embodiment, the main body 8 of the control device 200 further comprises a touchpad 88. The touchpad 88 is in communication with the circuit module 9. The touchpad 88 has a plurality of touch-sensitive regions corresponding to a plurality of control switches 95 of the circuit module 9. When one of the touch-sensitive regions is touched, a corresponding control switch 95 is triggered.

Please refer to FIGS. 10 and 11 again. The control device 200 further comprises a covering member 4. The covering member 4 is movably disposed on the main body 8 for partially sheltering the holder 81. Preferably, the covering member 4 is pivotally coupled to the main body 8. In addition, a slot 40 is defined by the covering member 4 and the main body 8 in common. In a case that the control device 200 is in an operating status, the covering member 4 is disposed on the main body 8 for partially sheltering the holder 81. Meanwhile, the length of the slot 40 is shorter than the length of the roller 2. In such way, the roller 2 is limited to be located on the holder 81 by the covering member 4. Consequently, even if the external force is inadvertently applied on the roller 2 by the user, the possibility of detaching the roller 2 from the holder 81 will be minimized. Moreover, according to the operating situation or the operating feel, the roller 2 may be cleaned or replaced by the user. After the covering member 4 is uplifted and the holder 81 is not sheltered by the covering member 4, the length of the slot 40 is greater than the length of the roller 2. Under this circumstance, the user may take the roller 2 to detach the roller 2 from the holder 81. The configurations of the roller 2 are similar to those of the roller 2 of the first embodiment, and are not redundantly described herein.

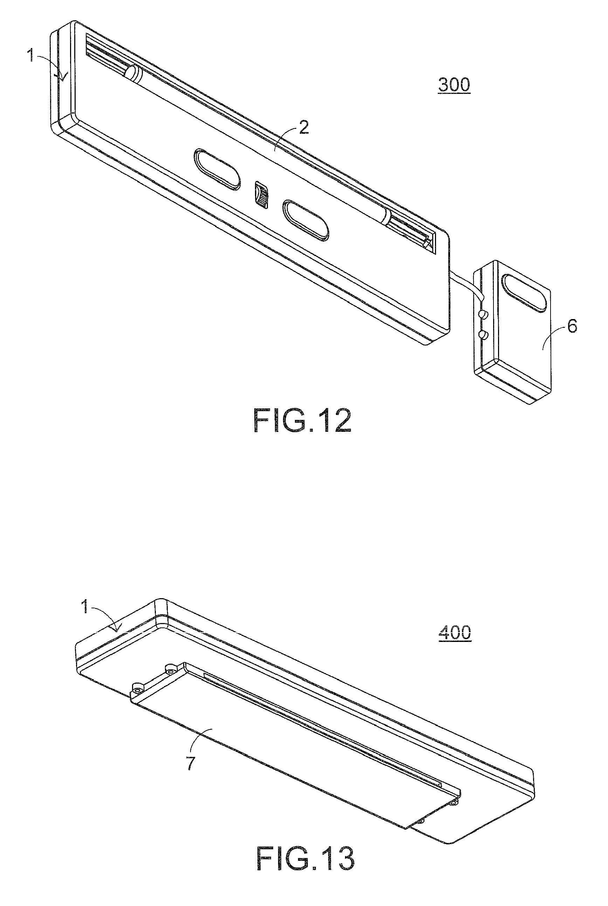

Moreover, the control device of the present invention may further comprise a peripheral device in order to increase the peripheral functions required for the user. Please refer to FIGS. 12 and 13. FIG. 12 is a schematic perspective view illustrating a control device 300 with a scanning device according to an embodiment of the present invention. FIG. 13 is a schematic perspective view illustrating a control device 400 with another scanning device according to another embodiment of the present invention. The configurations of the main body or the roller may be identical to those of the main body 1, 8 or the roller 2. Alternatively, the main body 1, 8 or the roller 2 used in the first embodiment or the second embodiment may be selectively modified according to the practical requirements.

As shown in FIG. 12, the peripheral device of the control device 300 is a handheld scanning device 6. The handheld scanning device 6 is in communication with the circuit board in a wired transmission manner or a wireless transmission manner, and externally connected to the main body 1. After a document is scanned by the handheld scanning device 6 in a paragraph-by-paragraph scanning manner, the scanned images are combined into a complete image by a built-in application program.

As shown in FIG. 13, the peripheral device of the control device 400 is a sheet fed scanning device 7. The sheet fed scanning device 7 is in communication with the circuit board in a wired transmission manner or a wireless transmission manner. In this embodiment, the sheet fed scanning device 7 is physically connected to the bottom of the main body 1. After the document to be scanned is placed in front of the entrance of the sheet fed scanning device 7, the document can be directly fed into the sheet fed scanning device 7 so as to be scanned.

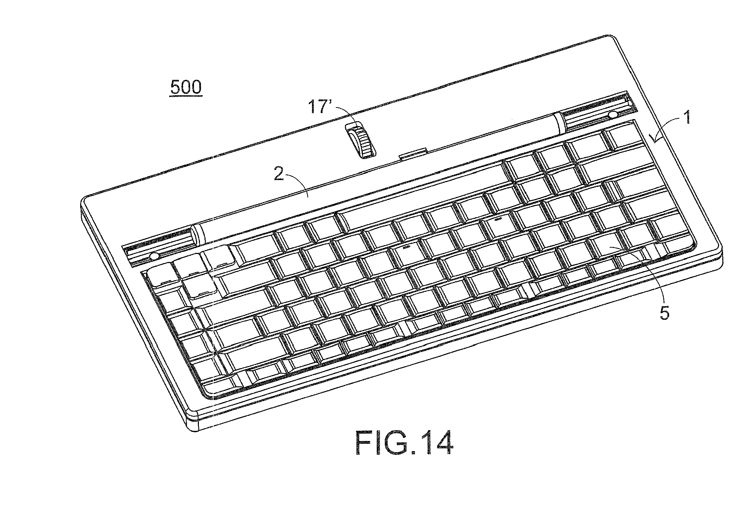

In some embodiments, the peripheral device is a keyboard 5. FIG. 14 is a schematic perspective view illustrating a control device 500 with a keyboard 5 according to an embodiment of the present invention. The configurations of the main body or the roller may be identical to those of the main body 1, 8 or the roller 2. Alternatively, the main body 1, 8 or the roller 2 used in the first embodiment or the second embodiment may be selectively modified according to the practical requirements.

Please refer to FIG. 14 again. The keyboard 5 is in communication with the circuit board in a wired transmission manner or a wireless transmission manner. It is preferred that the keyboard 5 is integrally formed with the main body 1. Consequently, the control device may be operated by using the keyboard 5 to type and using the roller 2 to control the cursor. In addition, the keyboard 5 may be equipped with three-dimensional wheel 17'. The three-dimensional wheel 17' may be pressed down, tilted leftwards or rightwards, or moved leftwards or rightwards in order to facilitate controlling the cursor and/or inputting a command. Moreover, according to the practical requirements, the keyboard 5 may be additionally equipped with another type of wheel, or the wheel may be omitted.

In some embodiments, the peripheral device is a projection module, a camera module, an industrial computer or host, a commercial computer or host, a medical computer or host, a handheld electronic device, or a combination thereof. According to the user's requirement, any two of these peripheral devices may be combined together.

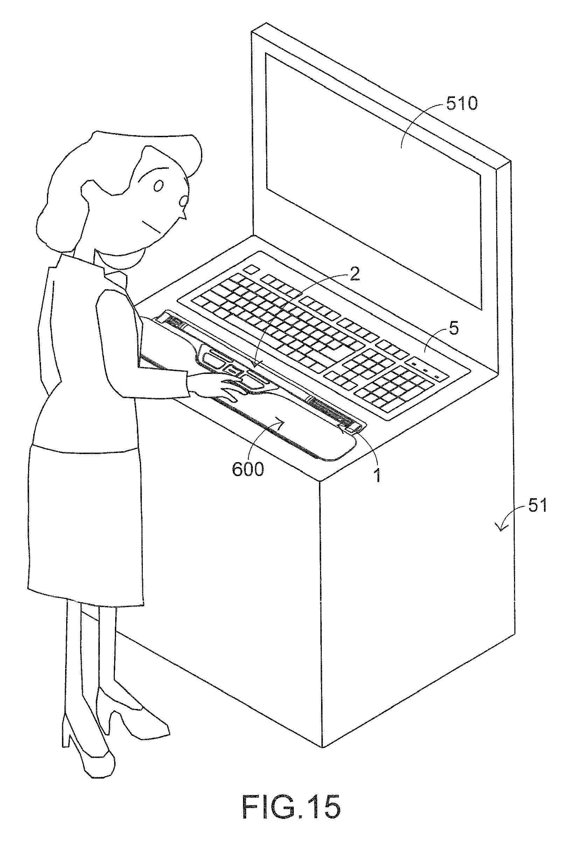

FIG. 15 is a schematic perspective view illustrating an application environment of a control device 600 according to an embodiment of the present invention. The configurations of the main body or the roller may be identical to those of the main body 1, 8 or the roller 2. Alternatively, the main body 1, 8 or the roller 2 used in the first embodiment or the second embodiment may be selectively modified according to the practical requirements.

For example, the control device 600 of the present invention may be applied to a general vertical-type machine 51. For example, the vertical-type machine 51 is a query machine or a movable workstation of a medical unit. The query machine is installed in a supermarket for allowing a standing customer to inquire about the product information. Generally, the vertical-type machine 51 comprises a display screen 510 and a keyboard 5. Since the control device 600 of the present invention has small volume, the control device 600 can be installed on a limited platform of the vertical-type machine 51. Under this circumstance, the roller 2 of the control device 600 can be operated by the user to control the cursor as if a mouse is operated. In other words, the control device 600 of the present invention can facilitate a user to operate the vertical-type machine 51.

From the above description, the control device of the present invention is used for controlling movement of a cursor by operating a roller. During the control device is operated by the user, the user can maintain the same gesture in order to meet the ergonomic requirements and reduce the possibility of hurting the wrist. Moreover, since the roller is detachable from the holder, in order to match the user's different requirements, the roller may be removed for cleaning or the roller may be replaced with a new roller that has a weight suitable to the operating feel of the user. Moreover, a variety of peripheral devices may be integrated into the control device of the present invention, so that the functions of the control device become more versatile.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A control device for controlling a cursor, said control device comprising:
a main body with a holder, wherein an accommodation space is defined within said main body;
a roller detachably disposed on said holder, and at least comprising a roller body and an assembled sliding mechanism, wherein said assembled sliding mechanism is connected with said roller body, and said assembled sliding mechanism is in contact with said holder; and
a circuit module received within said accommodation space, wherein said circuit module comprises a detecting module for detecting said roller on said holder.

2. The control device according to claim 1, wherein said assembled sliding mechanism comprises a sliding-auxiliary element and a positioning member, wherein said sliding-auxiliary element is positioned on said roller body by said positioning member, and said sliding-auxiliary element is in contact with said holder.

3. The control device according to claim 1, further comprising a covering member, wherein said covering member is movably disposed on said main body for partially sheltering said holder, and a slot is defined by said covering member and said main body collectively, wherein when said holder is partially sheltered by said covering member, the length of said slot is shorter than the length of said roller, and said roller is limited to be located on said holder by said covering member, wherein when said holder is not sheltered by said covering member, the length of said slot is greater than the length of the roller, so that said roller is detachable from said holder.

4. A control device for controlling a cursor, said control device comprising:
a main body with a holder, wherein an accommodation space is defined within said main body;
a covering member movably disposed on said main body for partially sheltering said holder, wherein a slot is defined by said covering member and said main body collectively;
a roller detachably disposed on said holder; and
a circuit module received within said accommodation space, wherein said circuit module comprises a detecting module for detecting said roller on said holder,
wherein when said holder is partially sheltered by said covering member, the length of said slot is shorter than the length of said roller, and said roller is limited to be located on said holder by said covering member, wherein when said holder is not sheltered by said covering member, the length of said slot is greater than the length of the roller, so that said roller is detachable from said holder.

5. The control device according to claim 4, wherein said roller comprises a roller body and an assembled sliding mechanism, wherein said assembled sliding mechanism is connected with said roller body, and said assembled sliding mechanism is in contact with said holder, wherein said assembled sliding mechanism comprises a sliding-auxiliary element and a positioning member, wherein said sliding-auxiliary element is positioned on said roller body by said positioning member, and said sliding-auxiliary element is in contact with said holder.

6. The control device according to claim 2 or 5, wherein said sliding-auxiliary element is a sliding-auxiliary ring, said positioning member comprises an outer clamping element and an inner clamping element, and said inner clamping element is coupled with said roller body, wherein said sliding-auxiliary ring is clamped by said outer clamping element and said inner clamping element collectively, said outer clamping element has an extension part, and at least one hooking structure is formed at a distal end of said extension part, wherein when said extension part is penetrated through said sliding-auxiliary ring, said at least one hooking structure of said outer clamping element is engaged with said inner clamping element; or
wherein said sliding-auxiliary element comprises a sliding-auxiliary part and a stopping part, said sliding-auxiliary part and said stopping part are respectively located at both ends of said sliding-auxiliary element, said stopping part is extended from said sliding-auxiliary part, and said sliding-auxiliary part has an arc-shape profile, wherein said positioning member is a fixing ring, said fixing ring is coupled with said roller body, a perforation is defined within said fixing ring, and said stopping part is penetrated through said perforation, so that said sliding-auxiliary part and said stopping part are limited to be located at both sides of said fixing ring, wherein a cross-sectional area of said perforation is smaller than the maximum cross-sectional area of said sliding-auxiliary part and smaller than the maximum cross-sectional area of said sliding-auxiliary part; or
wherein said sliding-auxiliary element comprises an upper hemisphere, a lower hemisphere, a connecting part, and a bearing, wherein said upper hemisphere and the lower hemisphere are connected with each other by said connecting part, said bearing has an aperture, said connecting part is penetrated through said aperture, said positioning member is a receiving seat, said receiving seat is coupled with said roller body, and said bearing is inserted into said receiving seat.

7. The control device according to claim 1 or 4, wherein said main body further comprises a plurality of operation members for triggering a plurality of control switches of said circuit module; or
wherein said main body further comprises a touchpad, which is in communication with said circuit module for triggering a plurality of control switches of said circuit module; or
wherein said main body further comprises at least one connecting arm, at least one shaft, and at least one supporting member, wherein said at least one connecting arm is extended from said holder and connected to said at least one shaft, and at least one shaft is pivotally coupled to said at least one supporting member, wherein said main body further comprises a triggering key, and said triggering key is extended from said at least one shaft, wherein as the at least one shaft is rotated, said triggering key is synchronously rotated to trigger a specified one of said plurality of control switches of said circuit module.

8. The control device according to claim 1 or 4, wherein said control device further comprises a peripheral device,
wherein said peripheral device is a keyboard, which is in communication with said circuit module in a wired transmission manner or a wireless transmission manner; or
wherein said peripheral device is handheld scanning device or a sheet fed scanning device, which is in communication with said circuit module in a wired transmission manner or a wireless transmission manner; or
wherein said peripheral device at least comprises a projection module, a camera module, an industrial computer or host, a commercial computer or host, a medical computer or host, a handheld electronic device, or a combination thereof.

9. A control device for controlling a cursor, said control device comprising:
a main body with a holder, wherein an accommodation space is defined within said main body;
a roller detachably disposed on said holder;
a circuit module received within said accommodation space, wherein said circuit module further comprises a detecting module for detecting said roller on said holder; and
a peripheral device in communication with said circuit module.

10. The control device according to claim 9, wherein said roller comprises a roller body and an assembled sliding mechanism, wherein said assembled sliding mechanism is connected with said roller body, and said assembled sliding mechanism is in contact with said holder, wherein said assembled sliding mechanism comprises a sliding-auxiliary element and a positioning member, wherein said sliding-auxiliary element is positioned on said roller body by said positioning member, and said sliding-auxiliary element is in contact with said holder.

11. The control device according to claim 10, wherein said sliding-auxiliary element is a sliding-auxiliary ring, said positioning member comprises an outer clamping element and an inner clamping element, and said inner clamping element is coupled with said roller body, wherein said sliding-auxiliary ring is clamped by said outer clamping element and said inner clamping element collectively, said outer clamping element has an extension part, and at least one hooking structure is formed at a distal end of said extension part, wherein when said extension part is penetrated through said sliding-auxiliary ring, said at least one hooking structure of said outer clamping element is engaged with said inner clamping element; or
wherein said sliding-auxiliary element comprises a sliding-auxiliary part and a stopping part, said sliding-auxiliary part and said stopping part are respectively located at both ends of said sliding-auxiliary element, said stopping part is extended from said sliding-auxiliary part, and said sliding-auxiliary part has an arc-shape profile, wherein said positioning member is a fixing ring, said fixing ring is coupled with said roller body, a perforation is defined within said fixing ring, and said stopping part is penetrated through said perforation, so that said sliding-auxiliary part 231 a and said stopping part are limited to be located at both sides of said fixing ring, wherein a cross-sectional area of said perforation is smaller than the maximum cross-sectional area of said sliding-auxiliary part and smaller than the maximum cross-sectional area of said sliding-auxiliary part; or
wherein said sliding-auxiliary element comprises an upper hemisphere, a lower hemisphere, a connecting part, and a bearing, wherein said upper hemisphere and the lower hemisphere are connected with each other by said e connecting part, said bearing has an aperture, said connecting part is penetrated through said aperture, said positioning member is a receiving seat, said receiving seat is coupled with said roller body, and said bearing is inserted into said receiving seat.

12. The control device according to claim 2 or 5 or 10, wherein said sliding-auxiliary element is made of polyoxymetylene (POM), polytetrafluoroethylene (PTFE) or any other self-lubricating material; or wherein said assembled sliding mechanism comprises two sliding-auxiliary elements and two positioning members, and said two sliding-auxiliary elements are positioned at the both ends of said roller body by said two positioning members.

13. The control device according to claim 9, wherein said main body further comprises a plurality of operation members for triggering a plurality of control switches of said circuit module; or
wherein said main body further comprises a touchpad, which is in communication with said circuit module for triggering a plurality of control switches of said circuit module; or
wherein said main body further comprises at least one connecting arm, at least one shaft, and at least one supporting member, wherein said at least one connecting arm is extended from said holder and connected to said at least one shaft, and at least one shaft is pivotally coupled to said supporting member, wherein said main body further comprises a triggering key, and said triggering key is extended from said at least one shaft, wherein as the at least one shaft is rotated, said triggering key is synchronously rotated to trigger a specified one of said plurality of control switches of said circuit module.

14. The control device according to claim 9, further comprising a covering member, wherein said covering member is pivotally coupled to said main body for partially sheltering said holder, and a slot is defined by said covering member and said main body, wherein when said holder is partially sheltered by said covering member, the length of said slot is shorter than the length of said roller, and said roller is limited to be located on said holder by said covering member, wherein when said holder is not sheltered by said covering member, the length of said slot is greater than the length of the roller, so that said roller is detachable from said holder.

15. The control device according to claim 9, wherein said control device further comprises a peripheral device,
wherein said peripheral device is a keyboard, which is in communication with said circuit module in a wired transmission manner or a wireless transmission manner; or
wherein said peripheral device is a handheld scanning device or a sheet fed scanning device, which is in communication with said circuit module in a wired transmission manner or a wireless transmission manner; or
wherein said peripheral device at least comprises a projection module, a camera module, an industrial computer or host, a commercial computer or host, a medical computer or host, a handheld electronic device, or a combination thereof.
